# EUROPÄISCHE PATENTSCHRIFT

(11) **EP 1 399 048 B1**
(45) Veröffentlichungstag und Bekanntmachung des Hinweises auf die Patenterteilung: **14.03.2007**
(21) Anmeldenummer: 01986429.7
(22) Anmeldetag: 20.12.2001
(51) Int. Cl.: A47K 3/02, F21V 8/00

(54) **Sanitäre Einrichtung**
Sanitary device
Appareil sanitaire

(30) Priorität: 13.06.2001 DE 10128688
(43) Veröffentlichungstag der Anmeldung: 24.03.2004
(73) Patentinhaber: Koninklijke Philips Electronics N.V., 5621 BA Eindhoven (NL)
(72) Erfinder: Emde, Thomas, 60389 Frankfurt am Main (DE); Pohl, Heinrich Robert, 50769 Köln (DE)
(74) Vertreter: van der Veer, Johannis Leendert
(86) Internationale Anmeldenummer: PCT/EP2001/015105
(87) Internationale Veröffentlichungsnummer: WO 2002/100230

(56) Entgegenhaltungen:
- DE-A- 19 852 593
- US-A- 4 875 958

## Beschreibung

Die vorliegende Erfindung betrifft eine sanitäre Einrichtung, insbesondere Bade- oder Duschwanne oder Sanitärbecken bestehend aus wenigstens einem entsprechend der Form der Wanne bzw. des Sanitärbeckens geformten plattenförmigen Element, dem wenigstens ein Leuchtmittel zugeordnet ist.

Es ist aus dem Stand der Technik bekannt, Bade- oder Duschwannen mit einem oder mehreren Beleuchtungskörpern zu versehen, die vorwiegend als Effektbeleuchtung dienen. Insbesondere bei hochwertigen Wannen und Whirlpools verwendet man dazu einzelne Strahler, die in die Wanne eingebaut werden, beispielsweise im Randbereich der Wanne oder auch im Sitzbereich, so dass sie gegebenenfalls bei gefüllter Wanne unter der Wasseroberfläche liegen. Die Verwendung solcher Leuchten ist auch bei Schwimmbecken bekannt. Bei diesen Leuchten handelt es sich in der Regel um einzelne Strahler, so dass diese eine gerichtete punktuelle Beleuchtung liefern.

Es ist weiterhin bekannt, Badewannen, Duschewannen oder Sanitärbecken durch Tiefziehen von plattenförmigen Elementen, vorzugsweise aus Kunststoff herzustellen. Dazu wird jedoch in der Regel weiß oder farbig eingefärbter Kunststoff verwendet, beispielsweise Polyacryl oder verwandte Kunststoffe.

Die US-A-4 875 958 beschreibt sanitäre Einrichtungen, insbesondere Badewannen der eingangs genannten Gattung, bei denen eine Beleuchtung über Leuchtstoffröhren erfolgt, die sich unter der Badewanne befinden. Die Wanne ist mit einer farbigen Beschichtung versehen, die in einem Teilbereich am Wannenboden fehlt, so dass sich dort eine Art Fenster ergibt, welches einen Lichtdurchfall zulässt. Die Leuchtstoffröhren sind in einer unter der Wanne herausziehbaren Schublade untergebracht und strahlen ihr Licht in eine im Bereich des Fensters unter der Wanne angeordnete Acrylplatte ein. Bei dieser bekannten sanitären Einrichtung sind die Mittel zur Erzielung einer teilweisen Beleuchtung der Wanne konstruktiv recht aufwändig. Es ist nicht vorgesehen, das Licht direkt in das die Wanne bildende plattenförmige Element einzustrahlen und dieses quasi selbst als Lichtleiter zu verwenden.

Hier setzt die vorliegende Erfindung an. Aufgabe der vorliegenden Erfindung ist es, eine sanitäre Einrichtung, insbesondere eine Bade- oder Duschwanne oder ein Sanitärbecken der eingangs genannten Gattung zur Verfügung zu stellen, welche mit konstruktiv einfachen Mitteln so beleuchtbar ist, dass das Licht über die Fläche des plattenförmigen Elements abgegeben wird.

Die Lösung dieser Aufgabe liefert eine sanitäre Einrichtung, insbesondere eine Bade- oder . Duschwanne oder ein Sanitärbecken mit den Merkmalen des Patentanspruchs 1. Erfindungsgemäß ist vorgesehen, dass man wenigstens ein

Leuchtmittel verwendet, welches von der Stirnseite her Licht in das plattenförmige Element hinein abstrahlt, wobei dieses Licht dann als Streulicht über die Fläche des plattenförmigen Elements im Winkel zur Einstrahlrichtung abgegeben wird. Das verwendete plattenförmige Element sollte daher mindestens teilweise nach oben lichtdurchlässig sein und das Licht in Plattenrichtung leiten. Den gewünschten Effekt der Erzeugung von Streulicht kann man beispielsweise dadurch erzielen, dass das plattenförmige Element wenigstens an einer Seite bedruckt, gesandstrahlt, geätzt, beschichtet, graviert oder beklebt ist. Es ist auch möglich, dem plattenförmigen Element im Inneren eine lichtstreuende Struktur zu geben. Letzteres ist beispielsweise durch gezieltes Bestrahlen mit Laserstrahlung möglich, welche so fokussiert wird, dass sie im Inneren des plattenförmigen Elements mindestens bereichsweise eine Fehlstruktur erzeugt, die dann die das Licht umlenkende lichtstreuende Wirkung hervorruft.

Das Bedrucken, Sandstrahlen, Ätzen, Beschichten, Gravieren oder Bekleben des plattenförmigen Elements erfolgt vorzugsweise in einem Punktraster, Strichraster oder einem ähnlichen Raster. Diese Punktraster, Strichraster oder dergleichen kann dabei so fein sein, dass einerseits die lichtstreuende Wirkung erzielt wird, andererseits aber dennoch ein ausreichender Anteil des Lichts über die Fläche des plattenförmigen Elements vorzugsweise nach oben hin abgegeben wird. Man kann die Oberfläche des plattenförmigen Elements mit einem derart feinen Raster versehen, dass dieses mit dem Auge kaum wahrgenommen wird.

Gemäß einer Weiterbildung der Erfindung verwendet man zur Beleuchtung des plattenförmigen Elements vorzugsweise spezifische Leuchtmittel, die einen geringen Energiebedarf haben. Beispielsweise kann man das Licht von der Stirnseite her mittels LED's, SMD LED's oder dergleichen einstrahlen. Beispielsweise kann man eine Anzahl solcher LED's oder SMD LED's verwenden, die entlang einer Reihe angeordnet sind. Eine mögliche konstruktive Ausbildung sieht vor, dass vorzugsweise die plattenförmigen Elemente in ihrem stirnseitigen Randbereich durch Profilrahmen oder dergleichen eingefasst sind. Diese Profilrahmen können dann die verwendeten Leuchtmittel mindestens teilweise abdecken, so dass das Licht in das plattenförmige Element hinein, nicht aber oder nur zu einem geringeren Teil direkt zur Seite hin abgegeben wird, und dass eine Person, die dort hinschaut, wo sich das Leuchtmittel befindet, nicht geblendet wird. Man erreicht auf diese Weise einen interessanten Effekt, da die gesamte Fläche des plattenförmigen Elements beleuchtet erscheint.

Die Verwendung der genannten Leuchtmittel wie LED's, SMD LED's andere Leuchtdioden und dergleichen hat außerdem den Vorteil, dass man diese sehr gut steuern kann und durch eine beispielsweise elektronische Ansteuerung der Leuchtmittel in relativ einfacher Weise weißes oder gegebenenfalls farbiges Licht erzeugen kann.

Weiterhin kann gemäß einer Weiterbildung der Erfindung vorgesehen sein, dass Einrichtungen für die Veränderung der Helligkeit bzw. Beleuchtungsstärke und/oder der Farbe der Leuchtmittel vorhanden sind. Weiterhin kann man beispielsweise Steuereinrichtungen und/oder Sensoren vorsehen, die eine Steuerung der Leuchtmittel in Abhängigkeit vom einfallenden Tageslicht (Dimmung), abhängig von einer im Raum anwesenden Person oder nach einem beliebigen vorgegebenen Programm bewirken. Beispielsweise können als Sensoren Fotozellen und/oder Bewegungsmelder dienen. Die Verwendung derartiger Sensoren hat den Vorteil, dass man vorsehen kann, dass sich die Beleuchtung dann einschaltet, wenn eine Person die Bade- oder Duschwanne oder das Sanitärbecken benutzt. Durch eine Helligkeitssteuerung kann man auch allmählich die Leuchtmittel quasi einblenden oder das Einschalten der für das plattenförmige Element vorgesehenen Beleuchtungseinrichtungen abhängig machen vom Tageslicht bzw. Kunstlicht, welches zur Raumbeleuchtung aus anderen Beleuchtungsquellen vorhanden ist. Dadurch lassen sich interessante Effekte erzielen, wenn man beispielsweise bei Ausschalten des Raumlichts eine Bade- oder Duschwanne über ihre Fläche beleuchtet, wobei diese Beleuchtung auch farbig sein kann. Durch die Steuerung der Leuchtmittel kann beispielsweise auch ein Farbwechsel stattfinden.

Es empfiehlt sich, für die Herstellung eines solchen plattenförmigen Elements Kunststoff zu verwenden, grundsätzlich ist aber auch die Herstellung aus Glas oder anderen Werkstoffen möglich. Bei der Verwendung von Kunststoff setzt man vorzugsweise einen für das Tiefziehen geeigneten Kunststoff ein, beispielsweise Poly(Meth)Acryl oder verwandte Kunststoffe. Dies ermöglicht die einfache Herstellung von Badewannen, Duschwannen oder Sanitärbecken nach der Erfindung mit Hilfe herkömmlicher Tiefziehtechniken. Die Erfindung hat außerdem den Vorteil, dass sich die Einbringung von Leuchtmitteln in die tiefgezogene Wanne erübrigt, wodurch auch mögliche Schwachstellen und Abdichtungsprobleme vermieden werden. Die erfindungsgemäß notwendigen Leuchtmittel können nachträglich im Bereich der Stirnseite (im Kantenbereich) problemlos an der Bade- oder Duschwanne oder dem Sanitärbecken angebracht werden.

Gemäß einer Weiterbildung der Erfindung ist vorgesehen, dass wenigstens ein plattenförmiges Element, aus dem die Wanne oder das Sanitärbecken geformt ist oder welches Teil der Wanne oder des Sanitärbeckens ist, ein Verbundmaterial umfasst. Dies bedeutet, das plattenförmige Element ist ein Verbundelement bestehend aus mehreren miteinander verbundenen Platten, beispielsweise aus einem mehrschichtigen Kunststoff oder aus Verbundglas. Über Leuchtmittel wird dabei das Licht stirnseitig wenigstens in eine Platte des Verbundelements eingestrahlt und über deren Fläche abgegeben.
Diese beleuchtete lichtleitende Platte des Verbundelements kann gegebenenfalls die oberste Platte sein, die die Oberflächenschicht bildet. Diese beleuchtete Platte kann aber auch in einen Verbund eingebettet sein und eine Mittelschicht oder untere Schicht eines mehrschichtigen plattenförmigen Verbundelements sein, welches entsprechend der Form der Wanne oder des Sanitärgegenstands geformt wird. Bei einem solchen Verbundelement kann man auch Licht über Leuchtmittel in mehrere der Platten oder Schichten des Verbundelements einleiten. Dies bietet die Möglichkeit, beispielsweise unterschiedliche Effektbeleuchtungen, z. B. in unterschiedlichen Farben oder unterschiedliche Beleuchtungsintensitäten durch einzelnes oder gemeinsames Schalten verschiedener Leuchtmittelgruppen und dadurch Ausleuchtung einzelner oder mehrerer unterschiedlich angeordneter Platten eines geformten plattenförmigen Verbundelements zu schaffen. Der Einsatz einer solchen Verbundplattentechnik kann auch herstellungs- und montagetechnische Vorteile aufweisen. Dabei ist im Rahmen der vorliegenden Erfindung wichtig, dass die Lichtabgabe des entsprechend dem Sanitärgegenstand oder der Wanne geformten Verbundplattenelements immer über die Fläche oder einen Teil der Fläche erfolgt, so dass im Gegensatz zu der bisherigen Verwendung diskreter Leuchtmittel die Wanne oder der Sanitärgegenstand insgesamt als quasi flächig selbstleuchtend erscheinen.

Außer auf Duschwannen, Badewannen oder Sanitärbecken ist die vorliegende Erfindung auch auf sanitäre Einrichtungsgegenstände, d.h., insbesondere Einrichtungsgegenstände aus dem Badezimmerbereich anwendbar. Hierzu zählen insbesondere Duschtrennwände, Spiegel und dergleichen, die ebenso wie zuvor bei den Badewannen beschrieben wurde plattenförmige Elemente umfassen, die über stirnseitig Licht einstrahlende Leuchtmittel in der erfindungsgemäßen Weise beleuchtbar sind.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: einen Längsschnitt durch eine Badewanne gemäß der Erfindung;
- Fig. 2: einen vergrößerten Detailausschnitt 11 im Randbereich der Wanne von Figur 1;

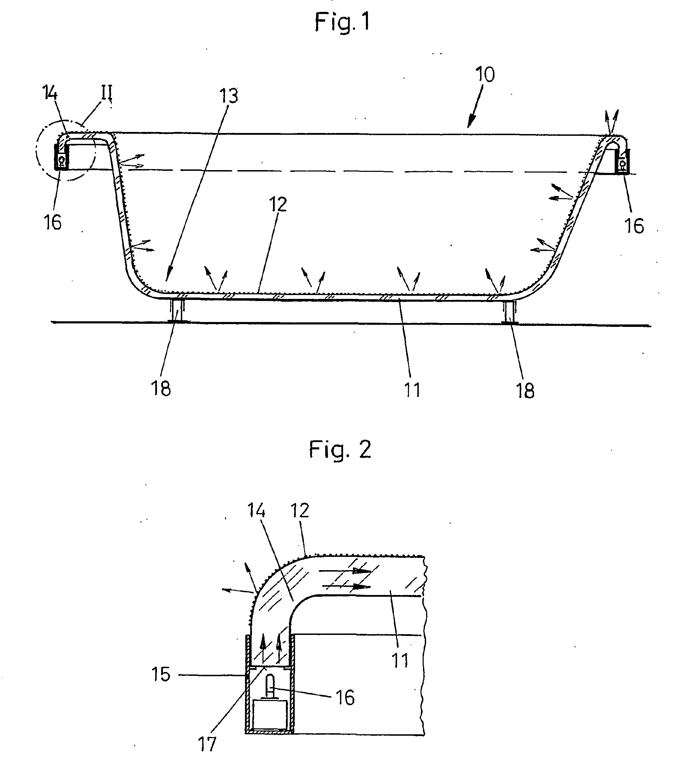

Zunächst wird auf Fig. 1 Bezug genommen. Die Darstellung zeigt in schematisch vereinfachter Ansicht einen Schnitt durch eine Badewanne 10 gemäß einem ersten Ausführungsbeispiel der Erfindung. Es handelt sich im Prinzip um eine Wanne aus einer tiefgezogenen Kunststoffplatte 11, beispielsweise aus Polyacryl oder dergleichen. Die Kunststoffplatte 11 hat beispielsweise eine herkömmliche Wannenform mit einem Wannentrog 13, der mit Wasser gefüllt wird und einem umgebogenen Wannenrand 14. Die Badewanne 10 steht auf Wannenfüßen 18.

Anders als eine herkömmliche Badewanne ist die erfindungsgemäße Badewanne 10 über die Fläche ihrer Kunststoffplatte 11 beleuchtbar. Dies wird dadurch realisiert, dass, wie man aus der vergrößerten Detaildarstellung gemäß Figur 2 erkennen kann, die den Randbereich 14 der Wanne darstellt, eine Reihe von Leuchtmitteln 16 vorhanden ist, die Licht in die Stirnseite 17 der Kunststoffplatte 11 einstrahlen. In der Darstellung gemäß Figur 2 sieht man lediglich eines dieser Leuchtmittel 16. In der Regel sind eine Anzahl solcher Leuchtmittel in regelmäßigen Abständen beispielsweise auf einer streifenförmigen Anordnung ringsum angeordnet, so dass allseitig Licht in die Stirnseite 17 der Kunststoffplatte 11 eingeleitet wird. Die Kunststoffplatte 11 wirkt dabei wie ein Lichtleiter und das Licht wird innerhalb der Kunststoffplatte weitergeleitet. Aufgrund der Tatsache, dass die Platte 11 zumindest in bestimmten Bereichen mindestens einseitig, vorzugsweise an der Oberseite ein lichtstreuendes Raster aufweist, wird das Licht jeweils um etwa 90° umgelenkt und über die Fläche der Kunststoffplatte 11 in den Wannentrog 13 abgegeben, so dass die Fläche der Badewanne 10 für den Betrachter hell erscheint. Für die Lichtstreuung kann man beispielsweise die Kunststoffplatte 11 mit einem Punktraster 12 bedrucken oder diese an ihrer Oberfläche ätzen oder auch im Inneren z. B. mittels Laserstrahl Fehlstrukturen erzeugen, die dann das Licht in die gewünschte Richtung streuen.

Als Leuchtmittel 16 wählt man vorzugsweise Leuchtmittel mit niedrigem Energieverbrauch wie z. B. LED's, irgendeiner Bauart oder andere Leuchtdioden oder dergleichen, die sich insbesondere elektronisch ansteuern lassen. Dies ermöglicht einerseits eine interessante Ansteuerung der Leuchtmittel 16 zur Erzeugung von z. B. farbig wechselnden Effektbeleuchtungen. Andererseits kann man die Leuchtmittel 16 beispielsweise über Sensoren steuern, so dass die Helligkeit der Beleuchtung bei geringerem Fremdlichteinfluss zunimmt oder die Beleuchtung sich einschaltet, wenn eine Person die Badewanne 10 benutzt.

Anstelle einer einzigen in Form einer Wanne geformten Kunststoffplatte 11 (plattenförmiges Element), wie in dem zuvor beschriebenen Ausführungsbeispiel, kann man auch eine Verbundplatte verwenden, die aus mehreren miteinander verbundenen plattenförmigen Elementen besteht. Diese Verbundplatte weist wiederum die Wannenform auf, wie anhand des Ausführungsbeispiels unter Bezugnahme auf die Figuren 1 und 2 erläutert wurde. Die Verbundplatte kann entsprechend der Wannenform tiefgezogen werden und aus Kunststoff bestehen, aber grundsätzlich ist auch die Verwendung einer entsprechend geformten Verbundglasplatte möglich. Auch bei dieser Bauvariante wird das Licht über geeignete Leuchtmittel, insbesondere LED's oder andere Leuchtdioden stirnseitig eingespeist und zwar in mindestens eines der plattenförmigen Elemente einer solchen Verbundplatte. Es ist auch möglich, auf diese Weise Licht in mehrere solcher plattenförmigen Verbundelemente einer Verbundplatte einzuspeisen, so dass man dann beispielsweise die Leuchtmittel, die die einzelnen plattenförmigen Elemente beleuchten unabhängig voneinander steuern kann, um verschiedene Beleuchtungseffekte zu erzielen oder verschieden farbige beleuchtete, die Wanne bildende Platten zu schaffen. Das mindestens eine beleuchtete plattenförmige Element, in das das Licht stirnseitig eingespeist wird, ist wiederum ähnlich wie in dem zuvor beschriebenen Ausführungsbeispiel mindestens einseitig beispielsweise in einem Punktraster, Strichraster oder dergleichen bedruckt, geätzt, beschichtet, beklebt oder weist im Inneren eine Fehlstruktur auf, so dass ein Streueffekt erzielt wird und das stirnseitig in das plattenförmige Element eingeleitete Licht umgelenkt wird und von der dem Raum zugewandten Oberseite des plattenförmigen Elements flächig abgegeben wird. Die Anzahl der stirnseitig vor wenigstens einem plattenförmigen Element einer solchen Verbundplatte angeordneten Leuchtdioden kann relativ hoch sein, je nach Art der verwendeten Leuchtdioden und nach den Anforderungen an die gewünschte Beleuchtungsstärke und Helligkeit. Beispielsweise kann man mehr als hundert oder mehr Leuchtdioden pro laufendem Meter der Stirnfläche anordnen. Bei Verwendung einer entsprechend einer Wanne geformten Verbundplatte können die einzelnen miteinander verbundenen plattenförmigen Elemente der Platte aus verschiedenen Materialien bestehen, beispielsweise aus Weißglas, farbigem Glas, Floatglas oder entsprechenden Kunststoffplatten, die überwiegend lichtdurchlässig sein sollten, zumindest, wenn sie das beleuchtete plattenförmige Element bilden oder über dem beleuchteten plattenförmigen Element liegen. Für unter dem plattenförmigen Element liegende Platten des Verbundmaterials ist es nicht notwendig, dass diese überwiegend lichtdurchlässig sind.

Hier kann man beispielsweise auch eingefärbte Glas- oder Kunststoffplatten verwenden.

## Patentansprüche

1. Sanitäre Einrichtung, insbesondere Bade- oder Duschwanne oder Sanitärbecken bestehend aus wenigstens einem entsprechend der Form der Wanne bzw. des Sanitärbeckens geformten plattenförmigen Element (11), dem wenigstens ein Leuchtmittel (16) zugeordnet ist, **dadurch gekennzeichnet, dass** das Leuchtmittel (16) von der Stirnseite her Licht in das plattenförmige Element hinein abstrahlt, wobei dieses Licht als Streulicht über die Fläche des plattenförmigen Elements im Winkel zur Einstrahlrichtung abgegeben wird.

2. Sanitäre Einrichtung, insbesondere Bade- oder Duschwanne oder Sanitärbecken nach Anspruch 1; **dadurch gekennzeichnet, dass** das wenigstens eine plattenförmige Element (11) eine Platte aus Kunststoff oder eine Glasscheibe ist.

3. Sanitäre Einrichtung, insbesondere Bade- oder Duschwanne oder Sanitärbecken nach Anspruch 1 oder 2, **dadurch gekennzeichnet, dass** das wenigstens eine plattenförmige Element (11) wenigstens einseitig an seiner Oberfläche in einem Punktraster, Strichraster oder ähnlichem Raster bedruckt ist oder ein durch Sandstrahlen, Ätzen, Beschichten, Gravieren oder Bekleben mit Partikeln erzeugtes Punktraster, Strichraster oder ähnliches Raster zur Lichtstreuung aufweist.

4. Sanitäre Einrichtung, insbesondere Bade- oder Duschwanne oder Sanitärbecken nach einem der Ansprüche 1 bis 3, **dadurch gekennzeichnet, dass** das wenigstens eine plattenförmige Element im Inneren, d.h. mit Abstand von der Oberfläche mindestens bereichsweise eine vorzugsweise durch Laserstrahlung erzeugte Fehlstruktur aufweist, die die das Licht umlenkende lichtstreuende Wirkung erzielt.

5. Sanitäre Einrichtung, insbesondere Bade- oder Duschwanne oder Sanitärbecken nach einem der Ansprüche 1 bis 4, **dadurch gekennzeichnet, dass** das oder die plattenförmigen Elemente im stirnseitigen Randbereich durch Profilrahmen (15) eingefasst ist (sind).

6. Sanitäre Einrichtung, insbesondere Bade- oder Duschwanne oder Sanitärbecken nach einem der Ansprüche 1 bis 5, **dadurch gekennzeichnet, dass** das oder die Leuchtmittel (16), welche(s) Licht von der Stirnseite her in das plattenförmige Element (11) hinein abstrahlt durch einen Profilrahmen (15) oder dergleichen mindestens teilweise abgedeckt ist.

7. Sanitäre Einrichtung, insbesondere Bade- oder Duschwanne oder Sanitärbecken nach einem der Ansprüche 1 bis 6, **dadurch gekennzeichnet, dass** als Leuchtmittel (16) wenigstens ein LED oder SMD LED, vorzugsweise eine Anzahl LED's oder SMD LED's oder andere Leuchtdioden vorgesehen sind.

8. Sanitäre Einrichtung, insbesondere Bade- oder Duschwanne oder Sanitärbecken nach einem der Ansprüche 1 bis 7, **dadurch gekennzeichnet, dass** mindestens teilweise Leuchtmittel (16) vorgesehen sind, die geeignet sind, farbiges Licht abzugeben.

9. Sanitäre Einrichtung, insbesondere Bade- oder Duschwanne oder Sanitärbecken nach einem der Ansprüche 1 bis 8, **dadurch gekennzeichnet, dass** Einrichtungen vorgesehen sind, um die Helligkeit bzw. Beleuchtungsstärke und/oder die farbliche Mischung der Leuchtmittel zu verändern.

10. Sanitäre Einrichtung, insbesondere Bade- oder Duschwanne oder Sanitärbecken nach einem der Ansprüche 1 bis 9, **dadurch gekennzeichnet, dass** Steuereinrichtungen und/oder Sensoren vorgesehen sind, die eine Steuerung der Leuchtmittel in Abhängigkeit vom einfallenden Tageslicht, abhängig von einer im Raum anwesenden Person oder nach einem beliebigen vorgegebenen Programm bewirken.

11. Sanitäre Einrichtung, insbesondere Bade- oder Duschwanne oder Sanitärbecken nach Anspruch 10, **dadurch gekennzeichnet, dass** als Sensoren wenigstens eine Fotozelle und/oder ein Bewegungsmelder vorgesehen ist.

12. Sanitäre Einrichtung, insbesondere Bade- oder Duschwanne oder Sanitärbecken nach einem der Ansprüche 1 bis 11, **dadurch gekennzeichnet, dass** das wenigstens eine plattenförmige Element (11) mindestens überwiegend aus einem Polyacryl, insbesondere aus einem Polymethacryl, oder einem verwandten Kunststoff besteht.

13. Sanitäre Einrichtung, insbesondere Bade- oder Duschwanne oder Sanitärbecken nach einem der Ansprüche 1 bis 12, **dadurch gekennzeichnet, dass** das oder die plattenförmigen Elemente (11) aus tiefziehfähigem mindestens teilweise lichtdurchlässigem Kunststoff bestehen.

14. Sanitäre Einrichtung, insbesondere Bade- oder Duschwanne oder Sanitärbecken nach einem der Ansprüche 1 bis 13, **dadurch gekennzeichnet, dass** diese wenigstens ein plattenförmiges Element (11) umfasst, welches ein Verbundelement aus mehreren miteinander verbundenen Platten ist.

15. Sanitäre Einrichtung, insbesondere Bade- oder Duschwanne oder Sanitärbecken nach Anspruch 14, **dadurch gekennzeichnet, dass** die Leuchtmittel (16) bei einem als Verbundelement ausgebildeten plattenförmigen Element (11) wenigstens einer Platte des Verbundelements zugeordnet sind und das Licht stirnseitig in diese Platte einstrahlen.

## Claims

1. A sanitary device, in particular a bath tub, a shower cubicle, or a sanitary basin, comprising at least one plate-type element (11) which is shaped in accordance with the shape of the relevant bath tub or basin and with which at least one illumination means (16) is associated, **characterized in that** the illumination means (16) radiate light into the plate-type element at the end face thereof, which light is subsequently given off in the form of scattered light over the surface of the plate-type element at an angle to the direction in which the light was put in.

2. A sanitary device, in particular a bath tub, a shower cubicle, or a sanitary basin as claimed in claim 1, **characterized in that** the at least one plate-type element (11) comprises a plate of synthetic resin or a glass plate.

3. A sanitary device, in particular a bath tub, a shower cubicle, or a sanitary basin as claimed in claim 1 or 2, **characterized in that** the at least one plate-type element (11) is imprinted with a dot pattern, line halftone pattern, or similar pattern on its surface at least at one side, or comprises a dot pattern, line halftone pattern or similar pattern generated by sandblasting, etching, coating, engraving, or adhering of particles, for the purpose of light scattering.

4. A sanitary device, in particular a bath tub, a shower cubicle, or a sanitary basin as claimed in any one of the claims 1 to 3, **characterized in that** the at least one plate-type element has structural faults at least locally in its interior, i.e. at a distance from its surface, which faults are preferably generated by means of laser beams and which faults cause the scattering effect whereby the light is deflected.

5. A sanitary device, in particular a bath tub, a shower cubicle, or a sanitary basin as claimed in any one of the claims 1 to 4, **characterized in that** the plate-type element or elements is or are held in profiled frames (15) in the end face regions.

6. A sanitary device, in particular a bath tub, a shower cubicle, or a sanitary basin as claimed in any one of the claims 1 to 5, **characterized in that** the illumination means (16) that radiate light into the plate-type element (11) at the end face thereof are covered at least in part by a profiled frame (15) or equivalent element.

7. A sanitary device, in particular a bath tub, a shower cubicle, or a sanitary basin as claimed in any one of the claims 1 to 6, **characterized in that** the illumination means (16) used are formed by at least one LED or SMD LED, preferably by a number of LEDs or SMD LEDs or other light emitting diodes.

8. A sanitary device, in particular a bath tub, a shower cubicle, or a sanitary basin as claimed in any one of the claims 1 to 7, **characterized in that** the illumination means (16) provided are at least in part designed for emitting colored light.

9. A sanitary device, in particular a bath tub, a shower cubicle, or a sanitary basin as claimed in any one of the claims 1 to 8, **characterized in that** devices are provided for changing the brightness or the illuminance and/or the color mixing of the illumination means.

10. A sanitary device, in particular a bath tub, a shower cubicle, or a sanitary basin as claimed in any one of the claims 1 to 9, **characterized in that** control units and/or sensors are provided which effect a control of the illumination means in dependence on incident daylight, in dependence on the presence of a person in the room, or in accordance with a given program.

11. A sanitary device, in particular a bath tub, a shower cubicle, or a sanitary basin as claimed in claim 10, **characterized in that** at least one photocell and/or one movement detector are/is provided as the sensor or sensors.

12. A sanitary device, in particular a bath tub, a shower cubicle, or a sanitary basin as claimed in any one of the claims 1 to 11, **characterized in that** the at least one plate-type element (11) is at least predominantly made of a polyacryl material, in particular of a polymethacryl material, or a related synthetic resin.

13. A sanitary device, in particular a bath tub, a shower cubicle, or a sanitary basin as claimed in any one of the claims 1 to 12, **characterized in that** the plate-type element or elements (11) consists or consist of an at least partly translucent synthetic resin capable of being deep-drawn.

14. A sanitary device, in particular a bath tub, a shower cubicle, or a sanitary basin as claimed in any one of the claims 1 to 13, **characterized in that** it comprises at least one plate-type element (11) which is a composite element consisting of a plurality of interconnected plate layers.

15. A sanitary device, in particular a bath tub, a shower cubicle, or a sanitary basin as claimed in claim 14, **characterized in that** the illumination means (16) in the case of a plate-type element (11) constructed as a composite element are each associated with at least one plate layer of the composite element and radiate the light into this plate layer at the end face thereof.

## Revendications

1. Equipement sanitaire, en particulier baignoire, bac de douche ou évier sanitaire composé d'au moins un élément en forme de plaque (11) moulé selon la forme de la baignoire, du bac de douche ou de l'évier sanitaire, auquel est attribué au moins un moyen d'éclairage (16), **caractérisé en ce que** le moyen d'éclairage (16) diffuse depuis le côté face de la lumière dans l'élément en forme de plaque, cette lumière étant délivrée comme une lumière diffusée sur la surface de l'élément en forme de plaque en formant un angle par rapport au sens de rayonnement.

2. Equipement sanitaire, en particulier baignoire, bac de douche ou évier sanitaire selon la revendication 1, **caractérisé en ce que** l'élément en forme de plaque (11) au moins est une plaque en plastique ou une plaque en verre.

3. Equipement sanitaire, en particulier baignoire, bac de douche ou évier sanitaire selon l'une des revendications 1 ou 2, **caractérisé en ce que** l'élément en forme de plaque (11) au moins est imprimé, du moins unilatéralement, sur sa surface dans un motif à points, à lignes ou un motif similaire ou présente un motif à points, à lignes, ou un motif similaire pour la diffusion de lumière produit par sablage, attaque, revêtement, gravure ou collage avec des particules.

4. Equipement sanitaire, en particulier baignoire, bac de douche ou évier sanitaire selon l'une des revendications 1 à 3, **caractérisé en ce que** l'élément en forme de plaque au moins présente à l'intérieur, c'est-à-dire à un intervalle par rapport à la surface, du moins par zones, une structure altérée produite de préférence par un rayonnement laser qui produit l'action de diffusion de la lumière qui dévie la lumière.

5. Equipement sanitaire, en particulier baignoire, bac de douche ou équipement sanitaire selon l'une des revendications 1 à 4, **caractérisé en ce que** le ou les éléments en forme de plaque sont bordés dans la zone du rebord côté face par des cadres profilés (15).

6. Equipement sanitaire, en particulier baignoire, bac de douche ou évier sanitaire selon l'une des revendications 1 à 5, **caractérisé en ce que** le ou les moyens d'éclairage (16) qui diffusent la lumière à partir du côté face dans l'élément en forme de plaque (11) sont recouverts par un cadre profilé (15) ou autre, du moins en partie.

7. Equipement sanitaire, en particulier baignoire, bac de douche ou évier sanitaire selon l'une des revendications 1 à 6, **caractérisé en ce que** les moyens d'éclairage prévus sont au moins une DEL ou DEL SMD, de préférence plusieurs DEL ou DEL SMD ou d'autres diodes électroluminescentes.

8. Equipement sanitaire, en particulier baignoire, bac de douche ou évier sanitaire selon l'une des revendications 1 à 7, **caractérisé en ce que** des moyens d'éclairage (16) qui conviennent pour délivrer une lumière colorée sont prévus, du moins en partie.

9. Equipement sanitaire, en particulier baignoire, bac de douche ou évier sanitaire selon l'une des revendications 1 à 8, **caractérisé en ce qu'**il est prévu des dispositifs pour faire varier la luminance ou l'intensité lumineuse et/ou le mélange coloré des moyens d'éclairage.

10. Equipement sanitaire, en particulier baignoire, bac de douche ou évier sanitaire selon l'une des revendications 1 à 9, **caractérisé en ce qu'**il est prévu des dispositifs de commande et/ou des capteurs qui assurent une commande des moyens d'éclairage en fonction de la lumière du jour incidente, en fonction de la personne présente dans la pièce ou en fonction d'un programme quelconque préalablement déterminé.

11. Equipement sanitaire, en particulier baignoire, bac de douche ou évier sanitaire selon la revendication 10, **caractérisé en ce qu'**au moins une cellule photoélectrique et/ou un détecteur de mouvement sont prévus comme capteurs.

12. Equipement sanitaire, en particulier baignoire, bac de douche ou évier sanitaire selon l'une des revendications 1 à 11, **caractérisé en ce que** l'élément en forme de plaque (11) au moins, se compose d'un polyacryle, en particulier d'un polyméthacryle ou d'un plastique apparenté, du moins majoritairement.

13. Equipement sanitaire, en particulier baignoire, bac de douche ou évier sanitaire selon l'une des revendications 1 à 12, **caractérisé en ce que** le ou les éléments (11) en forme de plaque se composent d'un plastique emboutissable, perméable à la lumière, du moins en partie.

14. Equipement sanitaire, en particulier baignoire, bac de douche ou évier sanitaire selon l'une des revendications 1 à 13, **caractérisé en ce que** cet élément en forme de plaque (11) au moins comprend un élément en forme de plaque (11) au moins qui est un élément composite composé de plusieurs plaques reliées l'une à l'autre.

15. Equipement sanitaire, en particulier baignoire, bac de douche ou évier sanitaire selon la revendication 14, **caractérisé en ce que** les moyens d'éclairage (16) sont attribués à au moins une plaque de l'élément composite en cas d'élément (11) en forme de plaque conçu comme un élément composite et diffusent la lumière côté face dans cette plaque.
